# EUROPEAN PATENT APPLICATION

(11) **EP 4 600 523 A1**
(43) Date of publication of application: **13.08.2025**
(21) Application number: 23874794.3
(22) Date of filing: 02.10.2023
(51) Int. Cl.: F16C 33/78, F16C 19/06, F16C 33/80, F16J 15/3204, F16J 15/447

(54) **ROLLING BEARING**

(30) Priority: 05.10.2022 JP 2022161222
(71) Applicant: NTN Corporation, Osaka-shi Osaka 530-0005 (JP)
(72) Inventor: TANAKA, Yutaka, Kuwana-shi, Mie 511-8678 (JP); ITO, Takeru, Kuwana-shi, Mie 511-8678 (JP)
(74) Representative: Maikowski & Ninnemann Patentanwälte Partnerschaft mbB
(86) International application number: PCT/JP2023/035833
(87) International publication number: WO 2024/075667

(57) **Abstract**

A rolling bearing includes: inner and outer rings; a plurality of balls interposed between the inner and outer ring; a retainer configured to retain the plurality of balls; and a seal member (6) attached to the outer ring and configured to close a bearing space between the inner ring and the outer ring. The inner ring has an outer peripheral surface on which a seal groove (7) is formed in a circumferential direction. The seal member (6) is a contact seal including a lip (15) configured to come into contact with the seal groove (7). The seal groove (7) has an outer groove wall surface (7c) which is an inclined surface which is inclined toward an outer diametric side as the inclined surface extends outward in an axial direction. The lip (15) has a tip end part (15c) having a round shape so that the tip end part contacts the outer groove wall surface (7c) of the seal groove (7) at from 80 to 100°. The outer groove wall surface (7c) has an inclination angle (I) of from 55 to 65° with respect to the axial direction.

## Description

### CROSS REFERENCE TO THE RELATED APPLICATION

This application is based on and claims Convention priority to a Japanese patent application No. 2022-161222 filed October 5, 2022, the entire disclosure of which is herein incorporated by reference as a part of this application.

### BACKGROUND OF THE INVENTION

### (Field of the Invention)

The present invention relates to a rolling bearing and to a technology which makes it possible to reduce outflow of grease from the inside of a bearing and entry of foreign objects from the atmosphere side at the same time.

### (Description of Related Art)

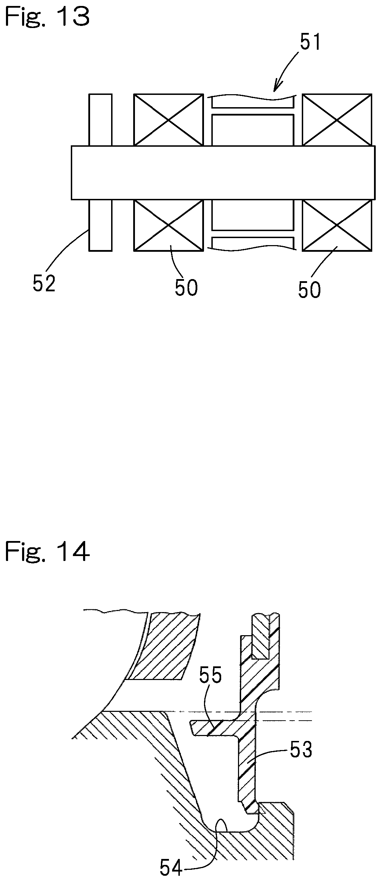

Rolling bearings 50 for a servomotor as shown in Fig. 13 may have an encoder 52 located in the vicinity of a motor 51. It is desired that such rolling bearings 50 produce little dirt on contact with contact seals in order to prevent malfunctioning of the encoder 52 due to attachment of dirt generated inside the bearings and seal abrasion powder to the encoder 52.

In seal structure of rolling bearings according to the prior art, for example, as shown in Fig. 14, a main lip 53 is in contact with an outer groove wall surface of a seal groove 54, and labyrinth seal is produced between a tip end part of a sub lip 55 and an inner groove wall surface of the seal groove 54 in order to achieve low torque and high sealing performance.

### [Related Document]

### [Patent Document]

[Patent Document 1] JP Laid-open Patent Publication No. 2006-170313

### SUMMARY OF THE INVENTION

Internal pressure of rolling bearings increases when the inner rings of the rolling bearings rotate at high speed. As a result, grease leaks out along with air if sealing performance is insufficient, causing fouling around the rolling bearings. The applicant has found that generation of dirt such as grease from the inside of a rolling bearing and generation of abrasion powder due to abrasion of rubber seals are reduced by suppression of change in surface pressure distribution due to change in sheal shape and interference occurring on contact with seals.

An object of the present invention is to provide a rolling bearing in which outflow of grease from the inside of the bearing and entry of foreign objects from the atmosphere side can be reduced at the same time, even when bearing internal pressure increases during rotation of the rolling bearing.

The present invention provides a rolling bearing including: an inner ring; an outer ring; a plurality of balls interposed between the inner ring and the outer ring; a retainer configured to retain the plurality of balls; and a seal member attached to the outer ring and configured to close a bearing space between the inner ring and the outer ring, the inner ring having an outer peripheral surface on which a seal groove is formed in a circumferential direction, wherein
the seal member is a contact seal which contacts the seal groove outside a lip,
the seal groove has an outer groove wall surface which is an inclined surface which is inclined toward an outer diametric side as the inclined surface extends outward in an axial direction,
the outer groove wall surface has an inclination angle of from 55 to 65° with respect to the axial direction, and
a lip shape is configured so that a tip end part of the lip has a round shape and contacts the outer groove wall surface at from 80 to 100°.

According to this configuration, the outer groove wall surface has an inclination angle of from 55 to 65° with respect to the axial direction, and the tip end part of the lip has a round shape. Hence, the surface pressure on the lip is distributed in such a way that the state in which the tip end part of the lip contacts in the normal direction, i.e., so-called normal contact can be maintained against bearing internal pressure generated during rotation of the rolling bearing. Therefore, it is possible to reduce outflow of grease and the like from the inside of the bearing and entry of foreign objects from the atmosphere side at the same time, even when bearing internal pressure increases during rotation of the rolling bearing. In the case where the inclination angle of the outer groove wall surface is less than 55°, the seal member may be easily turned up under bearing internal pressure, which therefore is not appropriate. On the other hand, in the case where the inclination angle of the outer groove wall surface is greater than 65°, the tip end part of the lip comes into contact with the inclined surface too strongly when bearing internal pressure rises, possibly resulting in larger torque or greater heat generation, which therefore is not appropriate.

The tip end part of the lip may have an arcuate shape having a radius of from 0.03 to 0.09 mm. In this case, it is possible to more reliably suppress change in the surface pressure distribution on the lip during rotation of the rolling bearing, and moreover to suppress undesired increase in torque, undesired heat generation in the lip, and the like. In the case where the tip end part of the lip has a radius smaller than 0.03 mm, the lip may not contact at a right angle when bearing internal pressure changes during rotation of the rolling bearing to cause a slight shift in the contact position of the lip. On the other hand, in the case where the tip end part of the lip has a radius larger than 0.09 mm, the tip end part of the lip may come into contact with the inclined surface strongly to increase the contact area when bearing internal pressure increases during rotation of the rolling bearing, possibly resulting in larger torque or greater heat generation, which therefore is not appropriate.

The seal member may include a metal core and a rubber member, the lip may be constituted by the rubber member, and the lip may have a surface roughness Ra of from 0.4 µm to 2.5 µm on the entirety of an inner surface of the lip or a part of the inner surface which is located on an inner diametric side with respect to a pitch circle diameter (PCD). In this case, desired effects on reducing dirt generation can be achieved while resistance to grease can be reduced. In the case where the arithmetic average roughness Ra is smaller than 0.4 µm, the effects on suppressing grease movement are reduced, and the effects on reducing dirt generation are thus limited. On the other hand, in the case where the arithmetic average roughness Ra is larger than 2.5 µm, i.e., the surface is too rough, resistance to grease may be rendered to be too high, which may be disadvantageous to rotation. Therefore, this is not appropriate.

The seal member may be provided with an air outlet configured to release internal pressure of the rolling bearing. In this case, bearing internal pressure can be released through the air outlet during rotation of the rolling bearing, so that excessive change in seal interference and outflow of grease due to increased bearing internal pressure can be reduced.

At least the seal member on one side of the rolling bearing may be provided with a plurality of air outlets in an outer peripheral part of the seal member, the air outlets may include a radial air outlet defined in the radial direction and an axial air outlet defined in the axial direction, and the radial air outlet and the axial air outlet may be arranged at different circumferential positions. Outflow of grease can be more reliably reduced by shifting the circumferential positions (i.e., the phase in the circumferential direction) of the radial air outlet and the axial air outlet in such a manner.

The air outlet may be provided in the lip of the seal member to release internal pressure of the rolling bearing. In this case, bearing internal pressure can be released through the air outlet during rotation of the rolling bearing, so that excessive change in seal interference and outflow of grease due to increased bearing internal pressure can be reduced.

The air outlet may be provided to the seal member disposed on one side or each of two sides of the rolling bearing.

The seal member may include a sub lip protruding axially inward from a base end part of the seal member, and labyrinth seal may be produced between a tip end part of the sub lip and an inner groove wall surface of the seal groove. In this case, the lip, which is the contact seal, and the sub lip can further enhance the effects on preventing outflow of the grease as well as the effects on preventing entry of foreign objects.

Two sub lips may be arranged apart from each other in the radial direction, and a grease dent is defined between these two sub lips. In this case, grease stored in the grease dent blocks outflow of the grease contributing lubrication and also prevents entry of foreign objects from the atmosphere side.

The retainer may include a grease storage part which can store grease on the inner diametric side of the retainer. In this case, grease accumulating in a stationary space during operation of the bearing can be stored in the grease storage part due to centrifugal force and further be supplied to the raceway surfaces. Thus, service life of grease can be extended as compared with a rolling bearing including a retainer without a grease storage part.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views:
Fig. 1 is a sectional view of a rolling bearing according to a first embodiment of the present invention;
Fig. 2 is an enlarged sectional view of a lip of a seal member of the rolling bearing;
Fig. 3 is a perspective view of the seal member;
Fig. 4A is a partially enlarged sectional view of the seal member cut at a radial air outlet;
Fig. 4B is a partially enlarged sectional view of the seal member cut at an axial air outlet;
Fig. 5A is an enlarged sectional view showing the contact state of the seal member against a seal groove;
Fig. 5B is a graph showing surface pressure distribution when the seal member has a minimum interference;
Fig. 5C is a graph showing surface pressure distribution when the seal member has a maximum interference;
Fig. 6 is a perspective view of a retainer of the rolling bearing;
Fig. 7A is a sectional view of a rolling bearing according to another embodiment of the present invention cut at a radial air outlet;
Fig. 7B is a sectional view of the rolling bearing cut at an axial air outlet;
Fig. 8 is an enlarged sectional view of a lip of a seal member of the rolling bearing;
Fig. 9A is an enlarged sectional view showing the contact state of the seal member against a seal groove;
Fig. 9B is a graph showing surface pressure distribution when the seal member has a minimum interference;
Fig. 9C is a graph showing surface pressure distribution when the seal member has a maximum interference;
Fig. 10 is an enlarged sectional view of a lip of a seal member of a rolling bearing according to yet another embodiment of the present invention;
Fig. 11 is a sectional view of a rolling bearing according to yet another embodiment of the present invention;
Fig. 12 is a perspective view of a retainer of a rolling bearing according to yet another embodiment of the present invention;
Fig. 13 schematically illustrates a rolling bearing for a servomotor;
Fig. 14 is an enlarged sectional view partially showing a seal structure of a rolling bearing according to a conventional example;
Fig. 15A is an enlarged sectional view showing the contact state of the seal member according to the conventional example against a seal groove;
Fig. 15B is a graph showing surface pressure distribution when the seal member has a minimum interference; and
Fig. 15C is a graph showing surface pressure distribution when the seal member has a maximum interference.

### DESCRIPTION OF THE EMBODIMENTS

### [First Embodiment]

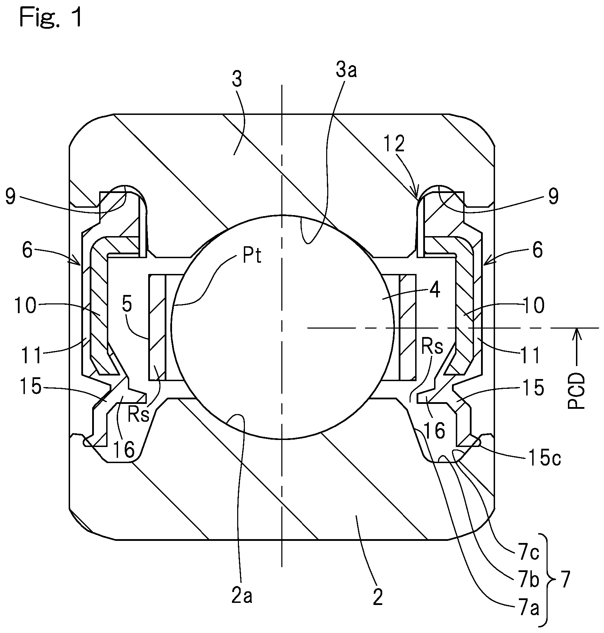

A rolling bearing according to a first embodiment of the present invention is described with reference to Fig. 1 to Fig. 6.

### <Schematic Configuration of Rolling Bearing>

As shown in Fig. 1, the rolling bearing 1 is a deep groove ball bearing including an inner ring 2, an outer ring 3, balls 4, a retainer 5, and seal members 6. A plurality of balls 4 are interposed between raceway surfaces 2a, 3a of the inner and outer rings 2, 3 and are retained by the retainer 5 at equal intervals in the circumferential direction. The seal members 6 are attached to the outer ring 3 and close a bearing space between the inner ring 2 and the outer ring 3. In this embodiment, the seal members 6, 6 are attached at opposite positions in the axial direction on the inner peripheral surface of the outer ring 3.

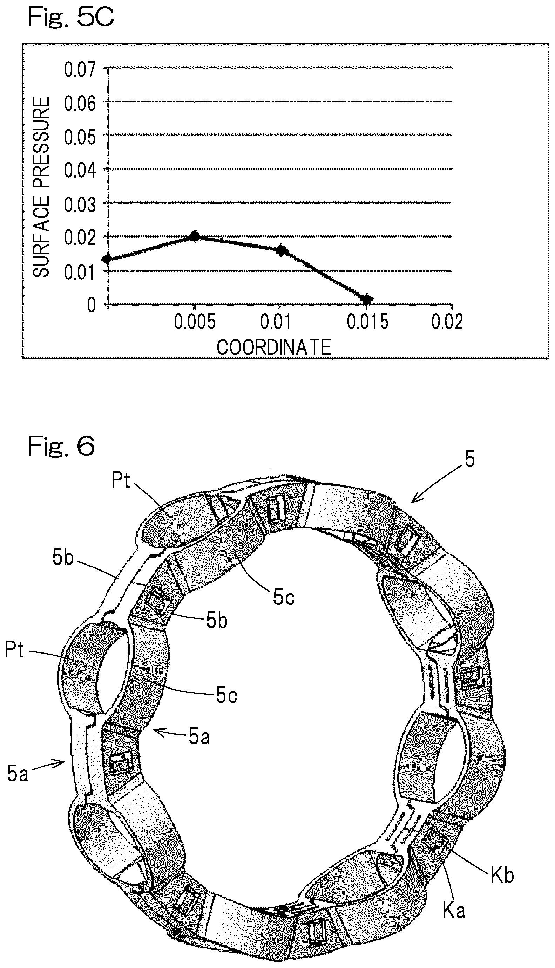

As shown in Fig. 6, the retainer 5 of this embodiment is a retainer including two sheets made of a synthetic resin, in which two annular bodies 5a, 5a having an identical shape are coupled to each other. The retainer 5 defines pockets Pt each having a cylindrical pocket shape in the axial direction, and the pockets Pt retain the balls 4 therein. Each annular body 5a includes a plurality of pocket wall parts 5c each having a semi-cylindrical shape and a plurality of connecting plate parts 5b. Two pocket wall parts 5c, 5c are combined in the axial direction to define a pocket Pt. The pockets Pt are located at equal intervals in the circumferential direction. The retainer 5 includes engaged holes Ka and engaging claws Kb which come into engagement with each other in the connecting plate parts 5b between the pockets Pt. Engagement of the engaging claws Kb into the engaged holes Ka brings the two annular bodies 5a, 5a having an identical shape into engagement, so that the retainer 5 is assembled. The pocket shape of the retainer 5 may be spherical. Grease is sealed in the bearing space.

### <Seal Structure>

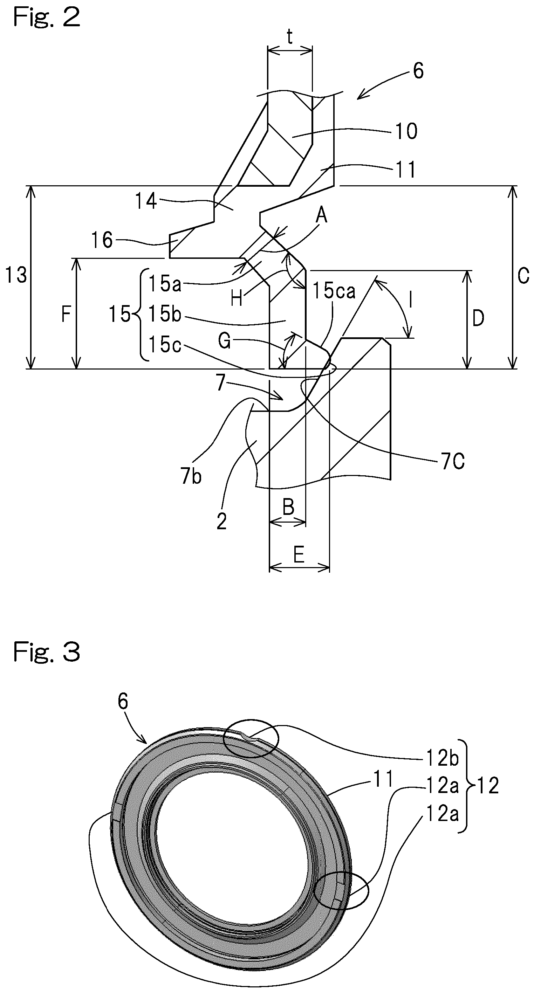

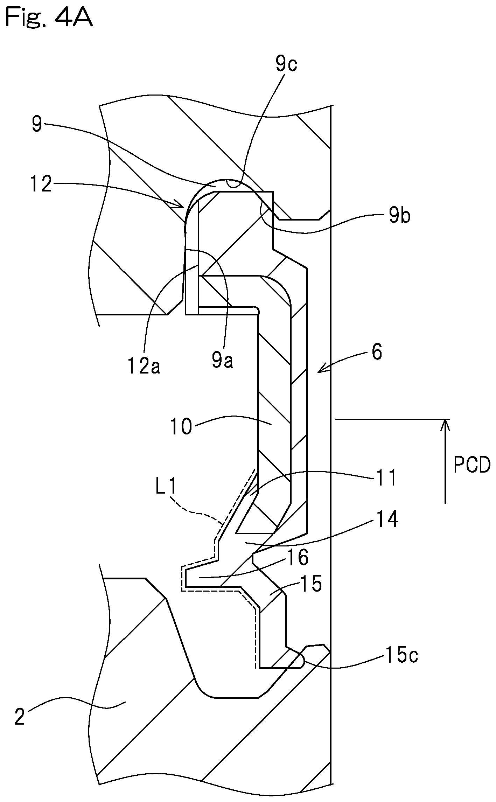

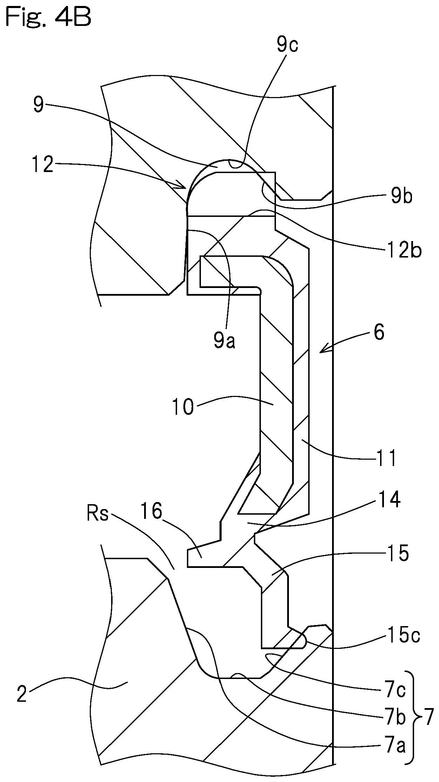

Each seal member 6 is a contact seal including a lip 15 which comes into contact with a seal groove 7. The inner ring 2 includes seal grooves 7 formed in the circumferential direction on the outer peripheral surface thereof, and the outer ring 3 includes, on the inner peripheral surface thereof, seal-member fixing grooves 9 which face the respective seal grooves 7. As shown in Figs. 1 to 3, each seal member 6 includes a metal core 10 and a rubber member 11 molded on the metal core 10, and the outer peripheral edge of the seal member 6 is fitted and fixed to a seal-member fixing groove 9 of the outer ring 3. As shown in Fig. 3, Fig. 4A and Fig. 4B, the seal member 6 is provided with, at the outer peripheral part thereof, air outlets 12 which release internal pressure of the rolling bearing.

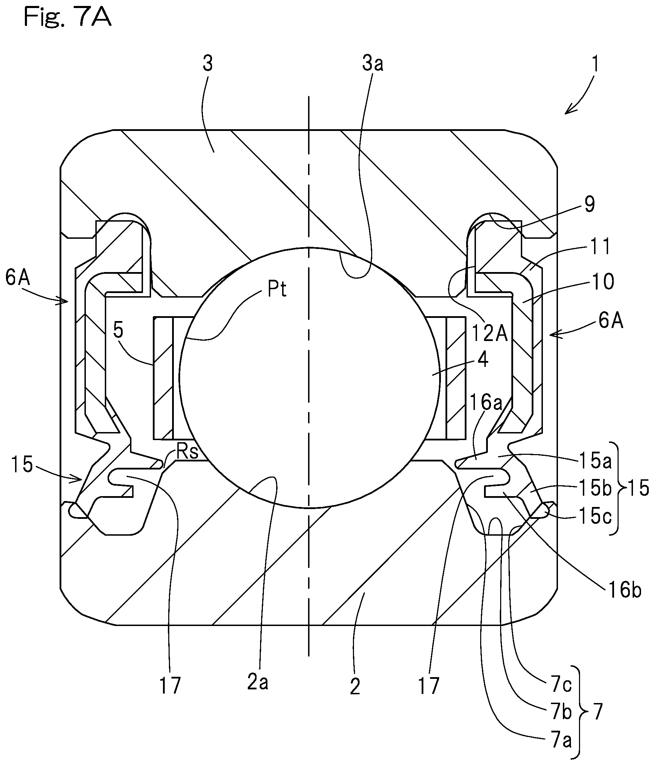

In Fig. 4A and Fig. 4B, a part of the seal member 6 which is in the vicinity of the outer periphery thereof is illustrated in such a way that this part is implanted into the seal-member fixing groove 9 of the outer ring 3. This part represents interference; in fact, the seal member is fitted into the seal-member fixing groove 9 in an elastically deformed manner. Similarly, a part of the lip 15 of the seal member 6 is also illustrated in such a way that this part is implanted into the seal groove 7 of the inner ring 3. This part represents interference; in fact, the seal member is in contact with the seal groove 7 in an elastically deformed manner. The same applies to the seal structure as described later (Fig. 7A, Fig. 7B, Fig. 10, Fig. 11).

The seal member 6 is provided with a plurality of air outlets 12. These air outlets 12 include radial air outlets 12a (Fig. 4A) defined in the radial direction and an axial air outlet 12b (Fig. 4B) defined in the axial direction. The air outlets 12a, 12b are constituted by respective grooves at the outer peripheral part of the seal member 6. The radial air outlets 12a and the axial air outlet 12b are located at different circumferential positions.

Specifically, as shown in Fig. 3, Fig. 4A, and Fig. 4B, two radial air outlets 12a, 12a are located at 180 degrees apart in phase in the circumferential direction on the inner surface of the outer peripheral part of the seal member 6 which faces an inner groove wall surface 9a of the seal-member fixing groove 9. A hole is defined by the radial air outlet 12a and the inner groove wall surface 9a. One axial air outlet 12b is located on the outer peripheral surface of the outer peripheral part of the seal member 6 which faces an outer peripheral groove wall surface 9c of the seal-member fixing groove 9. A hole is defined by the axial air outlet 12b and the outer peripheral groove wall surface 9c. The axial air outlet 12b is located at a circumferential position shifted by 90 degrees in phase with respect to the radial air outlets 12a. The radial air outlets 12a, 12a and the axial air outlet 12b communicate with one another through the outer peripheral groove wall surface 9c of the seal-member fixing groove 9. Thus, bearing internal pressure can be released through the two radial air outlets 12a, 12a and then the axial air outlet 12b during rotation of the rolling bearing 1. The circumferential positions of the radial and axial air outlets 12a, 12b are not limited to those phase positions mentioned above.

As shown in Fig. 1 and Fig. 2, the seal groove 7 of the inner ring 2 has an inner groove wall surface 7a, a groove bottom surface 7b, and an outer groove wall surface 7c sequentially toward the outer side in the axial direction. The inner groove wall surface 7a is an inclined surface which connects to the shoulder part of the inner ring 2 on either side of the raceway surface 2a in the axial direction and is inclined toward the inner diametric side as it extends outward in the axial direction. The groove bottom surface 7b smoothly connects to the inner groove wall surface 7a and extends substantially parallel to the axial direction. The outer groove wall surface 7c is an inclined surface which smoothly connects to the groove bottom surface 7b and is inclined toward the outer diametric side as it extends outward in the axial direction. An inclination angle I of the outer groove wall surface 7c relative to the axial direction is set in the range of from 55° to 65°.

In the case where the inclination angle I of the outer groove wall surface 7c is less than 55°, the seal member 6 may be easily turned up under bearing internal pressure, which therefore is not appropriate. On the other hand, in the case where the inclination angle I of the outer groove wall surface 7c is greater than 65°, the tip end part of the lip 15 comes into contact with the inclined surface too strongly when bearing internal pressure rises, possibly resulting in larger torque or greater heat generation, which therefore is not appropriate.

As shown in Fig. 2, an inner peripheral part 13 of the seal member 6 which extends radially inward with respect to the inner diameter of the metal core 10 is constituted by a rubber member 11. The rubber member 11 is standardly made of nitrile rubber. However, other materials may be used such as acrylic rubber, silicon rubber and fluororubber depending on service temperature.

The inner peripheral part 13 of the seal member 6 includes a narrowed part 14 having a decreasing thickness toward the inner diametric side, and a main lip (lip) 15 and a sub lip 16 which connect to the narrowed part 14 respectively. The narrowed part 14, the main lip 15 and the sub lip 16 are formed in one piece. The main lip 15 connects to the end portion of the narrowed part 14 on the inner diametric side, and the sub lip 16 protrudes inward in the axial direction from the inner surface portion of a base end part 15a of the main lip 15. As shown in Fig. 1, labyrinth seal Rs is produced between the tip end part of the sub lip 16 and the inner groove wall surface 7a of the seal groove 7.

As shown in Fig. 2, the main lip 15 includes the base end part 15a which is inclined toward the inner diametric side as it extends outward in the axial direction; a lip body part 15b which extends toward the inner diametric side from the base end part 15a; and a tip end part 15c which is located on an outer surface portion of the tip of the lip body part 15b. The tip end part 15c of the main lip 15 is formed in a round shape such that the tip end part 15c abuts against the outer groove wall surface 7c of the seal groove 7 in the normal direction. An outer diametric surface 15ca of the tip end part 15c of the main lip 15 is inclined toward the inner diametric side as it extends outward in the axial direction and smoothly connects to the round shape. In the case where the inclination angle I of the outer groove wall surface 7c of the seal groove 7 is in the range of from 55° to 65°, the tip end part 15c of the main lip 15 has an arcuate shape having a radius of from 0.03 mm to 0.09 mm.

In the case where the tip end part 15c of the lip 15 has a radius R smaller than 0.03 mm, the lip 15 may not contact at a right angle when bearing internal pressure changes during rotation of the rolling bearing to cause a slight shift in the contact position of the lip. On the other hand, in the case where the tip end part 15c of the lip 15 has a radius R larger than 0.09 mm, the tip end part 15c of the lip 15 may come into contact with the inclined surface strongly to increase the contact area when bearing internal pressure increases during rotation of the rolling bearing, possibly resulting in larger torque or greater heat generation, which therefore is not appropriate.

The dimensions of the other parts shown are set as below.
- Thickness A of base end part of main lip, thickness B of lip body part: 80% ± 10% of thickness t of metal core;
- Radial length D of lip body part: 55% ± 10% of radial length C of inner peripheral part of seal member (hereinafter, rubber part cross-section);
- Axial dimension E of lip body part from inner surface portion to tip end part: twice the thickness B of lip body part or smaller;
- Radial dimension F from inner diametric surface of sub lip to inner-diametric-side end part of lip body part: 60% ± 10% of radial length C of rubber part cross-section;
- Inclination angle G of outer diametric surface of tip end part relative to axial direction: 30° ± 20°; and
- Inclination angle H of base end part relative to lip body part: 135° ± 20°

As shown in Fig. 4A, the seal member 6 has a surface roughness, which is determined as an arithmetic average roughness Ra, in the range of from 0.4 µm to 2.5 µm on the inner surface of the main lip 15, the inner diametric surface, the inner surface and the outer diametric surface of the sub lip 16, the inner surface of the narrowed part 14, and the entirety of the inner surface of the rubber member 11 connecting to the inner surface of the narrowed part (on the area indicated with dot line L1 in Fig. 4A). In the case where the arithmetic average roughness Ra is smaller than 0.4 µm, the effects on suppressing grease movement are reduced, and the effects on reducing dirt generation are thus limited. On the other hand, in the case where the arithmetic average roughness Ra is larger than 2.5 µm, i.e., the surface is too rough, resistance to grease may become too high, which may be disadvantageous to rotation. Therefore, this is not appropriate.

In this embodiment, the surface roughness is defined not only for the inner surface of the main lip 15, but also for the inner surfaces of the sub lip 16, the narrowed part 14 and the like. However, at least the entirety of the inner surface of the main lip 15 or a part of the inner surface which is located on the inner diametric side with respect to the pitch circle diameter (PCD) may be defined to have a surface roughness, which is determined as an arithmetic average roughness Ra, in the range of from 0.4 µm to 2.5 µm.

### <Contact State of Seal Member 6 and FEM Analytical Results of Surface Pressure Change>

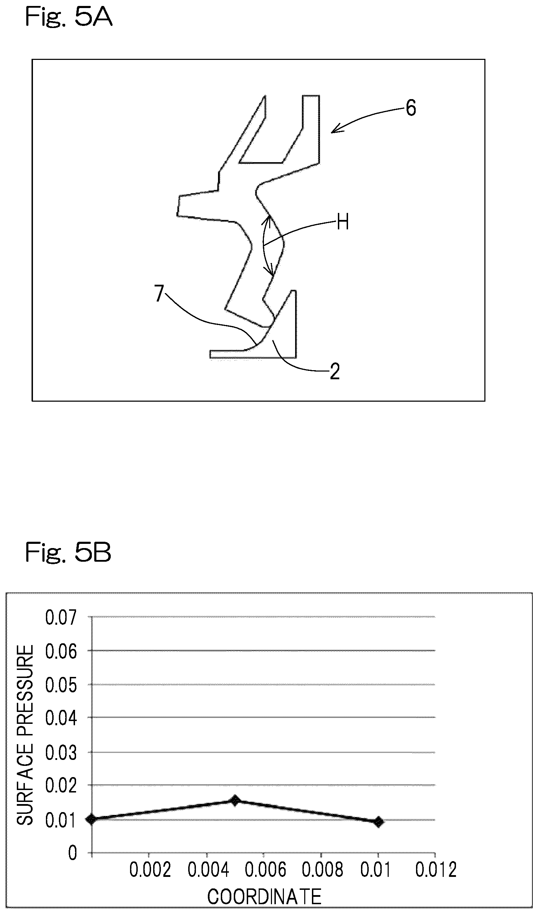

Fig. 5A is an enlarged sectional view showing the contact state of the seal member 6 against the seal groove 7. Fig. 5B is a graph showing surface pressure distribution when the seal member has a minimum interference, and Fig. 5C is a graph showing surface pressure distribution when the seal member has a maximum interference. In Fig. 5B and Fig. 5C, the vertical axis represents the surface pressure (unit: kgf/mm²) on the lip of the seal member, and the horizontal axis represents the coordinate (unit: mm) of a contacting part in the direction of inclination toward the outer diametric side, with the reference position (zero) located at a position where the tip end part 15c of the lip makes contact with the seal groove 7c on the inner diametric side.

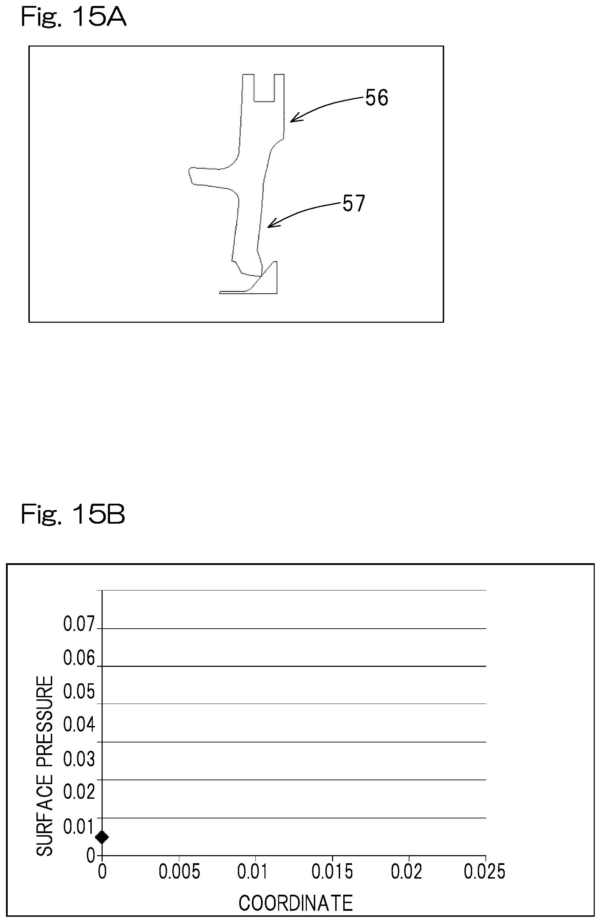

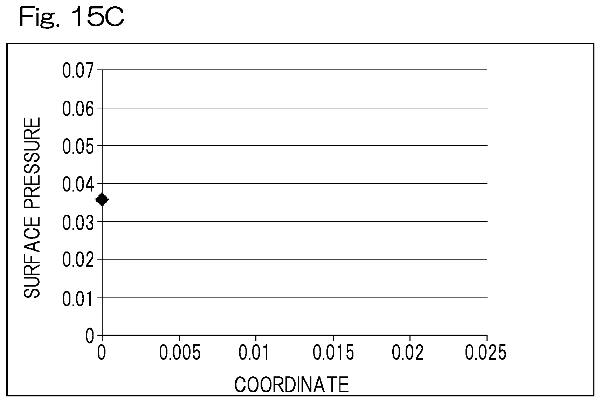

The analytical results in Fig. 5B and Fig. 5C show small change in the surface pressure on the lip 15 between when the seal member 6 has a minimum interference and when the seal member 6 has a maximum interference. In contrast, the analytical results of a seal member 56 of the conventional example in Fig. 15A, Fig. 15B and Fig. 15C show relatively large change in the surface pressure on the lip 57 between when the seal member 56 has a minimum interference (Fig. 15B) and when the seal member 56 has a maximum interference (Fig. 15C), so that the pressure can likely concentrate on one point. Therefore, this is not appropriate.

The evaluation results of this embodiment are described. Table 1 shows the evaluation results of sealing performance, low torque and low heat generation for each inclination angle of the outer groove wall surface. In Table, "Good" indicates being very good, "Acceptable" indicates being less than "Good", and "Poor" indicates being bad. According to the results shown in Table 1, in the case where the inclination angle of the outer groove wall surface is from 55 to 65°, it is possible to obtain a rolling bearing with high sealing performance, low torque and low heat generation. In addition, a contact angle between a lip part having the round shape and the outer groove wall surface is 90°.

**[Table 1]**

| Inclination angle of Outer Groove Wall Surface | 45° | 50° | 55° | 60° | 65° | 70° | 75° |
|---|---|---|---|---|---|---|---|
| Sealing Performance | Poor | Acceptable | Good | Good | Good | Good | Good |
| Low Torque and Low Heat Generation | Good | Good | Good | Good | Good | Acceptable | Poor |

Table 2 shows the evaluation results of sealing performance, low torque and low heat generation for each contact angle between the lip part having the round shape and the outer groove wall surface. In Table, "Good" indicates being very good, "Acceptable" indicates being less than "Good", and "Poor" indicates being bad. According to the results shown in Table 2, in the case where the contact angle between a lip part having the round shape and the outer groove wall surface is from 80 to 100°, it is possible to obtain a rolling bearing with high sealing performance, low torque and low heat generation. In addition, the inclination angle of the outer groove wall surface is 60°.

**[Table2]**

| Contact Angle between Lip Part Having Round Shape and Outer Groove Wall Surface | 60° | 70° | 80° | 90° | 100° | 110° | 120° |
|---|---|---|---|---|---|---|---|
| Sealing Performance | Poor | Acceptable | Good | Good | Good | Good | Good |
| Low Torque and Low Heat Generation | Good | Good | Good | Good | Good | Acceptable | Poor |

### <Effects and Advantages>

According to the rolling bearing 1 described above, the inclination angle I of the outer groove wall surface 7c is from 55 to 65°, and the tip end part 15c of the lip 15 has a round shape. Hence, the surface pressure on the lip 15 is distributed in such a way that the state in which the tip end part 15c of the lip 15 contacts in the normal direction, i.e., so-called normal contact can be maintained against bearing internal pressure generated during rotation of the rolling bearing 1. Therefore, it is possible to reduce outflow of grease from the inside of the bearing and entry of foreign objects from the atmosphere side at the same time, even when bearing internal pressure increases during rotation of the rolling bearing 1.

The tip end part 15c of the lip 15 has an arcuate shape having a radius of from 0.03 to 0.09 mm. Thus, it is possible to more reliably suppress change in the surface pressure distribution on the lip 15 during rotation of the rolling bearing 1 and moreover to suppress undesired increase in torque, undesired heat generation in the lip 15, and the like. The inner surface of the main lip 15 has a surface roughness Ra of from 0.4 to 2.5 µm, so that desired effects on reducing dirt generation can be achieved while resistance to grease can be reduced.

The seal member 6 is provided with, at the outer peripheral part thereof, an air outlet(s) 12 configured to release internal pressure of the rolling bearing 1. Thus, it is possible to release bearing internal pressure through the air outlet 12 during rotation of the rolling bearing 1, so that excessive change in seal interference and outflow of grease due to increased bearing internal pressure can be reduced. The radial air outlets 12a and the axial air outlet 12b are located at different circumferential positions. Outflow of grease can be more reliably reduced by shifting the circumferential positions, i.e., the phase in the circumferential direction, of the radial air outlets 12a and the axial air outlet 12b.

### <Other Embodiments>

In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

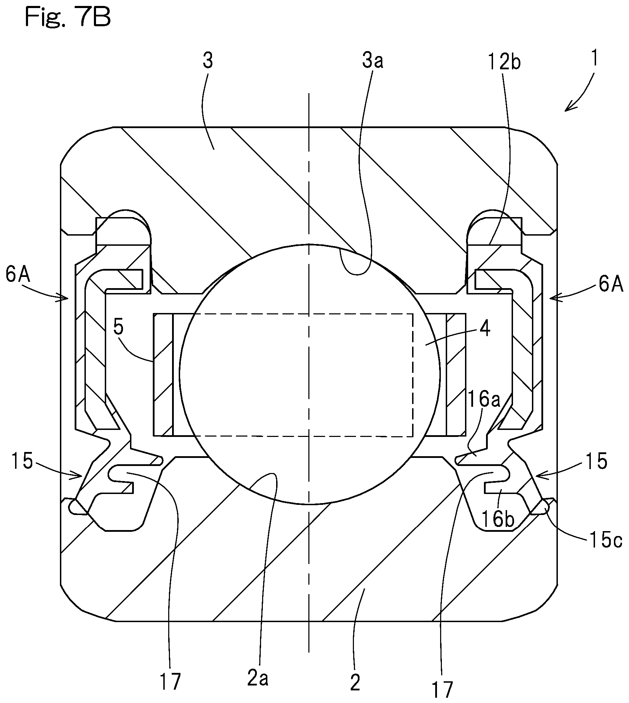

As shown in Fig. 7A and Fig. 7B, the seal member 6A includes two sub lips 16a, 16b apart from and parallel to each other in the radial direction, and a grease dent 17 may be defined between these two sub lips 16a, 16b. The grease dent 17 stores grease. One sub lip 16a protrudes axially inward from the inner surface portion of the base end part 15a of the main lip 15. The other sub lip 16b protrudes axially inward from the inner surface portion of the lip body part 15b of the main lip 15. It should be noted that the lip body part 15b in this embodiment connects to the end of the base end part 15a on the inner diametric side and is inclined toward the inner diametric side as it extends outward in the axial direction.

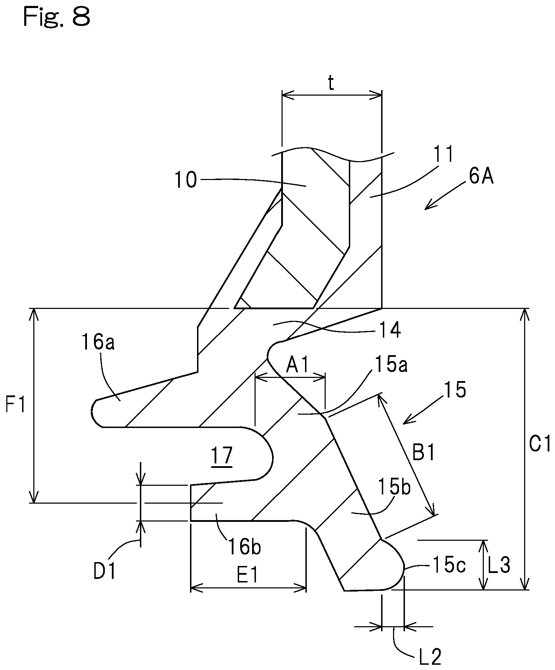

As shown in Fig. 8, the tip end part 15c of the main lip 15 which serves as a contacting part with the seal groove is formed in a round shape whose axial dimension L2 is 50% ± 10% of the radial dimension L3 thereof. The thickness A1 of the base end part 15a of the main lip 15 and the length B1 of the lip body part, which are associated with surface pressure, are set as below.
- Thickness A1: 80% ± 10% of thickness t of metal core; and
- Length B1: 50% ± 10% of radial length C1 of inner peripheral part of seal member (hereinafter, rubber part cross-section)

The dimensions and the like of the other parts are set as below.

Thickness D1, axial length E1, and set position F1 of the sub lip which is located on the inner diametric side are set as below.
- Thickness D1: 15% ± 5% of radial length C1 of rubber part cross-section;
- Axial length E1: 180% ± 10% of thickness t of metal core; and
- Set position F1: position within 70% ± 5% of radial length C of rubber part cross-section, away from inner diametric part of metal core

### <Contact State of Seal Member 6A and FEM Analytical Results of Surface Pressure Change>

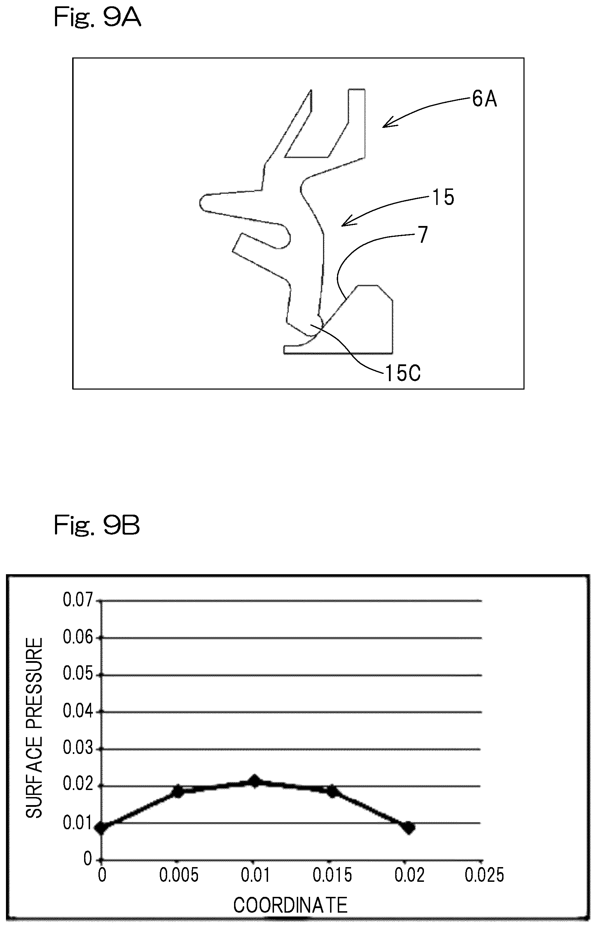

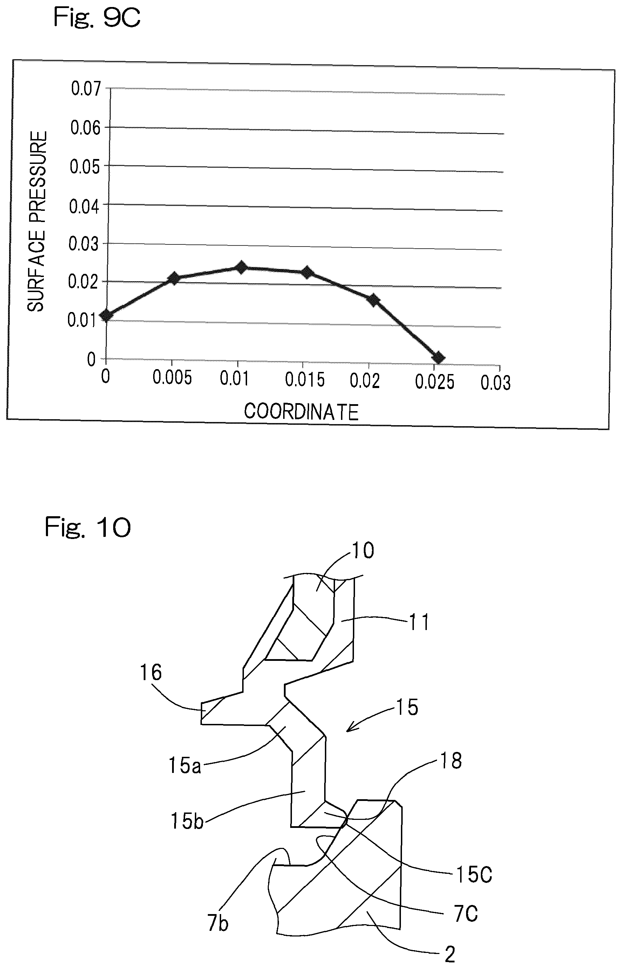

Fig. 9A is an enlarged sectional view showing the contact state of the seal member 6A according to this embodiment against the seal groove 7. Fig. 9B is a graph showing surface pressure distribution when the seal member has a minimum interference. Fig. 9C is a graph showing surface pressure distribution when the seal member has a maximum interference. In Fig. 9B and Fig. 9C, the vertical axis represents the surface pressure (unit: kgf/mm²) on the lip of the seal member, and the horizontal axis represents the coordinate (unit: mm) of a contacting part in the direction of inclination toward the outer diametric side, with the reference position (zero) located at a position where the tip end part 15c of the lip makes contact with the seal groove 7c on the inner diametric side.

The analytical results in Fig. 9B and Fig. 9C show small change in the surface pressure on the lip 15 between when the seal member 6A has a minimum interference and when the seal member 6A has a maximum interference. In contrast, the analytical results of the seal member 56 of the conventional example in Fig. 15A, Fig. 15B and Fig. 15C show relatively large change in the surface pressure on the lip 57 between when the seal member 56 has a minimum interference (Fig. 15B) and when the seal member 56 has a maximum interference (Fig. 15C), so that the pressure could concentrate on one point, which therefore is not appropriate.

According to this configuration, the grease stored in the grease dent 17 blocks outflow of the grease contributing lubrication and also prevents entry of foreign objects from the atmosphere side. Moreover, the same effects and advantages as described for the above embodiment can be obtained. The main lip 15, which is a contact seal, and the two sub lips 16a, 16b can further enhance the effects on preventing outflow of the grease and the like as well as the effects on preventing entry of foreign objects.

As shown in Fig. 10, the main lip 15 may be provided with an air outlet 18 configured to release internal pressure of the rolling bearing. The main lip 15 is provided with, for example, a plurality of radial air outlets 18 at equal intervals in the circumferential direction in the tip end part 15c. Each of the air outlets 18 is constituted by a groove. A hole is defined by an air outlet 18 and the outer groove wall surface 7c facing that air outlet 18. Nevertheless, the main lip 15 may be provided with one radial air outlet 18 in the tip end part 15c. The plurality of radial air outlets 18 may be located at irregular intervals in the circumferential direction. According to the configuration shown in Fig. 10, it is possible to release bearing internal pressure through the air outlets 18 during rotation of the rolling bearing, so that excessive change in seal interference and outflow of grease due to increased bearing internal pressure can be reduced.

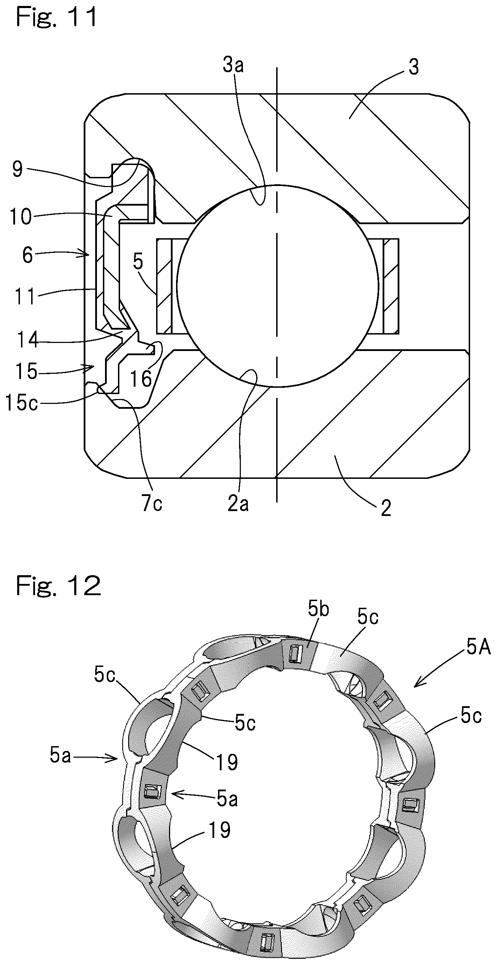

As shown in Fig. 11, a seal member 6 may be attached on only one side of the inner peripheral surface of the outer ring in the axial direction. In this case, it is possible to prevent bearing internal pressure from increasing excessively during rotation of the rolling bearing in advance, and moreover to reduce the number of components and thereby reduce costs. However, one or both of the inner and outer rings 2, 3 may have a seal groove(s) and/or a seal-member fixing groove(s).

As shown in Fig. 12, a wave retainer made of a resin may include a grease storage part 19 which can store grease on the inner diametric side of the retainer. This retainer 5A includes grease storage parts 19 in the form of cutouts on the inner diametric surfaces of the pocket wall parts 5c. Each of the grease storage parts 19 has a curved shape defined by a concave line along which the inner diametric surface of the pocket wall part 5c is partly cut. The grease storage parts 19 are formed during injection molding of the annular bodies 5a. However, the grease storage parts 19 can be formed by post-processing after injection molding. According to a rolling bearing including the retainer 5A with such grease storage parts 19, grease accumulating in a stationary space during operation of the bearing can be stored in the grease storage parts 19 due to centrifugal force and further be supplied to the raceway surfaces. Thus, service life of grease can be extended as compared with a rolling bearing including a retainer without a grease storage part.

A general, so-called wave steel-sheet retainer may be used, instead of the wave resin retainer used as a retainer in the embodiments. Alternatively, the retainer may be a so-called crown retainer which has a plurality of pockets for retaining balls therein at a plurality of positions in the circumferential direction of the annular bodies, the pockets being open on one side in the axial direction.

Although the present invention has been described in terms of the preferred embodiments thereof with reference to the drawings, various additions, modifications, or omissions may be made without departing from the scope of the invention. Accordingly, such variants are included within the scope of the present invention.

### Reference Numerals

- 1: rolling bearing
- 2: inner ring
- 3: outer ring
- 4: ball
- 5, 5A: retainer
- 6, 6A: seal member
- 7: seal groove
- 7c: outer groove wall surface
- 12: air outlet
- 12a: radial air outlet
- 12b: axial air outlet
- 15: lip
- 15c: tip end part
- 16a, 16b: sub lip
- 17: grease dent
- 18: air outlet
- 19: grease storage part

## Claims

1. A rolling bearing comprising: an inner ring; an outer ring; a plurality of balls interposed between the inner ring and the outer ring; a retainer configured to retain the plurality of balls; and a seal member attached to the outer ring and configured to close a bearing space between the inner ring and the outer ring, the inner ring having an outer peripheral surface on which a seal groove is formed in a circumferential direction, wherein
the seal member is a contact seal which contacts the seal groove outside a lip,
the seal groove has an outer groove wall surface which is an inclined surface which is inclined toward an outer diametric side as the inclined surface extends outward in an axial direction,
the outer groove wall surface has an inclination angle of from 55 to 65° with respect to the axial direction, and
a lip shape is configured so that a tip end part of the lip has a round shape and contacts the outer groove wall surface at from 80 to 100°.

2. The rolling bearing as claimed in claim 1, wherein the tip end part of the lip has an arcuate shape having a radius of from 0.03 to 0.09 mm.

3. The rolling bearing as claimed in claim 1 or 2, wherein the seal member includes a metal core and a rubber member,
the lip is constituted by the rubber member, and
the lip has a surface roughness Ra of from 0.4 µm to 2.5 µm on the entirety of an inner surface of the lip or a part of the inner surface which is located on an inner diametric side with respect to a pitch circle diameter (PCD).

4. The rolling bearing as claimed in claim 1 or 2, wherein the seal member is provided with an air outlet on an outer diametric part configured to release internal pressure of the rolling bearing.

5. The rolling bearing as claimed in claim 4, wherein at least the seal member on one side of the rolling bearing is provided with a plurality of air outlets in an outer peripheral part of the seal member,
the air outlets include a radial air outlet defined in the radial direction and an axial air outlet defined in the axial direction, and
the radial air outlet and the axial air outlet are arranged at different circumferential positions.

6. The rolling bearing as claimed in claim 1 or 2, wherein the lip of the seal member is provided with air outlet configured to release internal pressure of the rolling bearing.

7. The rolling bearing as claimed in claim 4, wherein the air outlet is provided to the seal member disposed on one side or each of two sides of the rolling bearing.

8. The rolling bearing as claimed in claim 1 or 2, wherein the seal member includes a sub lip protruding axially inward from a base end part of the seal member, and
labyrinth seal is produced between a tip end part of the sub lip and an inner groove wall surface of the seal groove.
